(19) **Europäisches Patentamt / European Patent Office / Office européen des brevets**

(11) **EP 2 444 459 A1**

(12) **EUROPEAN PATENT APPLICATION**
published in accordance with Art. 153(4) EPC

(43) Date of publication:
**25.04.2012 Bulletin 2012/17**

(21) Application number: **10789476.8**

(22) Date of filing: **15.06.2010**

(51) Int Cl.:
**C08L 101/00** (2006.01)   **C08J 3/20** (2006.01)
**C08K 7/06** (2006.01)

(86) International application number:
**PCT/JP2010/060079**

(87) International publication number:
**WO 2010/147101 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **16.06.2009   JP 2009143760**

(71) Applicant: **Nano Structure Research Institute Co.,
Ltd.
Nakatsu-shi, Oita 871-0152 (JP)**

(72) Inventor: **SHIMADA Shinichi
Nakatsu-shi
Oita 871-0152 (JP)**

(74) Representative: **Treeby, Philip David William
RGC Jenkins & Co.
26 Caxton Street
GB-London SW1H 0RJ (GB)**

(54) **CARBON NANOTUBE-RICH RESIN COMPOSITION AND METHOD FOR PRODUCING SAME**

(57)   Disclosed is a carbon nanotube-rich resin composition containing a granulated carbon nanotube in a large amount, in which the scattering property of the carbon nanotube is greatly reduced, the workability (such as processibility and handlability) is improved, and other physical properties such as wettability/dispersibility (with polymer matrix), conductivity and mechanical properties are significantly improved. The disclosed carbon nanotube-rich resin composition contains a carbon nanotube coated with a thermoplastic resin as a binder, wherein a carbon nanotube in an amount of 100 to 1500 parts by weight is combined with respect to 100 parts by weight of a thermoplastic resin.

**Description**

BACKGROUND OF THE INVENTION

1. Field of the invention

The present invention relates to a carbon nanotube (hereinafter, referred to as a 'CNT')-rich resin composition, and a method for producing the same.

2. Description of the Prior Art

A carbon nanotube (CNT) is a tube-structural carbon crystal having a high aspect ratio (diameter: several nm to about 500nm, length: 10nm to several tens of $\mu$m). There are various kinds of CNTs, such as a single-walled carbon nanotube having a single-layered structure, a multi-walled carbon nanotube having a multi-layered structure, a double-layered double-walled carbon nanotube categorized into a multi-walled carbon nanotube, etc. Furthermore, the CNT may have both ends closed, one-side end closed, or both ends opened. Also, according to rounding methods, several kinds of structures (such as an armchair structure) can be achieved. A method for producing a CNT includes an arc discharge method, a catalytic vapor phase preparation method, a laser abrasion method, and other methods, and each of them has merits and demerits.

Also, CNTs have been highlighted as a next generation material, and their use has been developed as a semiconductor, a fuel cell electrode, a display cathode ray, etc. as well as an antistatic agent or a conductive loaded material.

In general, it is known that various synthetic resins (hereinafter, referred to as 'resin') are combined with a CNT, so as to give electrical conductivity, high strength, high elasticity, or heat conductivity to the resins.

However, a CNT has a large amount of air due to its very low bulk density of 1 to 5g/100CC, and thus has a high scattering property. Accordingly, a manufacturer has many problems, in terms of safety, and operations, such as difficulty in handling, environmental pollution, due to scattering, the occurring of a bridge within a storage tank during empty transfer, a long transfer time during a process, and a long stuffing time for packaging, due to a low bulk density. Meanwhile, from the standpoint of a customer using the CNT, it is difficult to secure quantitativeness in handling of the CNT, when transferring it or combining/mixing/mix-kneading it with a resin or a liquid polymer matrix. Furthermore, a CNT has a low wettability with a polymer matrix, and especially, has a very low affinity with a resin when combining with the resin, at the initial stage of the combination. Accordingly, there is a problem in that mix-kneading of both materials requires a long time, and has a low dispersibility.

Another example of powder having a low bulk density, such as a CNT, may include carbon black. In combining it, at a high mixing ratio, with a solid or liquid elastomer matrix such as a resin or an elastomer, various research on a method using a compactor, a method using a solid matrix in a powder state, etc. have been performed. Meanwhile, manufacturers of a conductive filler such as carbon black have conventionally used it in a granulated state, with an increased bulk density, and an increased grain hardness.

From this condition, it is assumed that a CNT can be easily granulated. However, the CNT has a largely developed crystal structure unlike carbon black with a ball-shaped primary particle, a small amount of surface functional groups, a high aspect ratio due to a tube-shape or a fiber-shape, a high elasticity, and a lower bulk density than the carbon black. Thus, there are many problems in the granulation technology of the CNT.

In order to solve there problems, there are suggested high speed flow impact methods as noted in Patent Literature 1 and Patent Literature 2. Also, as noted in Patent Literature 3, there is suggested a method for preparing a CNT resin composition through precipitation of a water-soluble resin.

SUMMARY OF THE INVENTION

However, the above mentioned conventional technologies have the following problems.

(1) In the technology disclosed in Patent Literature 1 or Patent Literature 2, a device for carrying out the composition by disintegrating powder in a high speed flow is used. The device is originally used for attaching a different kind of powder microparticle to a powder core particle surface by a high speed flow impact, and thus it is very difficult to carry out granulation for only one kind of CNT. Furthermore, even if such granulation is possible, it is difficult to achieve millimeter-grade granulation because the granulated product has a very small particle diameter of 200$\mu$m or less.

For this reason, there are problems caused by a scattering property, in views of safety, environmental pollution, and handlability.

(2) Also, a conventional granulated product not using a binder shows significantly improved characteristics in the scattering property and the environmental pollution, during transfer and filling, and the combining/mixing/mix-kneading with a resin or a liquid polymer matrix, compared to a powder product, However, in order to satisfy「preventive countermeasures for prevention of exposure to Nanomaterials」which have recently become stricter, it cannot be said that the conventional product is sufficient even only in a view of the scattering property. Also, there are problems in that when the product is combined with a resin, etc. the initial combinability or the dispersibility is unsatisfied.

(3) The technology disclosed in Patent Literature 3 requires a complicated precipitation process. Furthermore, there is a limitation related to a usable resin. In other words, the resin used for coating of a CNT is required to be water-soluble. If it is not water-soluble, a functional group for giving water-solubility has to be introduced. Also, there is a problem in that a CNT is included in an amount of about 10% at most in a CNT resin composition according to the same literature.

The present invention has been made to solve the above described problems in the prior art. The present invention provides a CNT-rich resin composition in which without a complicated process such as introduction of a functional group, a hydrophilic or hydrophobic thermoplastic resin as a binder is coated on a CNT, and penetrated into a CNT aggregate so as to granulate the CNT. In the composition, the scattering property is significantly reduced, the workability (such as processibility handlability) is improved, and other physical properties such as wettability/dispersibility (with polymer matrix), conductivity and mechanical properties are significantly improved.

Also, the present invention provides a method for producing a CNT-rich resin composition, in which without a complicated process such as introduction of a functional group, a hydrophilic or hydrophobic thermoplastic resin as a binder is coated on a CNT, and penetrated into the CNT so as to granulate the CNT. In the composition, the scattering property is significantly reduced, the workability (such as processibility handlability) is improved, and other physical properties such as wettability/dispersibility (with polymer matrix), conductivity and mechanical properties are significantly improved.

In order to solve the problems, the inventive CNT-rich resin composition, and its producing method have the following configurations.

In accordance with an aspect of the present invention, there is provided a CNT-rich resin composition containing a carbon nanotube coated with a thermoplastic resin, wherein a carbon nanotube in an amount of 100 to 1500 parts by weight is combined with respect to 100 parts by weight of a thermoplastic resin.

Through the composition, the following advantages can be achieved.

(1) The surface of a CNT is coated with a resin, and further the inside of a CNT aggregate is penetrated and coated with the resin. Thus, the powder of the CNT is granulated, thereby extremely lowering the scattering extent of the CNT, and then significantly improving the handling capability.

(2) In the inventive CNT-rich resin composition, the inside of the CNT is filled with a resin, and the outer surface is coated with the resin. Furthermore, the composition is formed into a granulated product with a high bulk density without a strong cohesion between CNTs. Thus, when dispersed in a polymer matrix (hereinafter, referred to as 'substrate resin') as a dispersion medium, it can show significantly high wettability dispersibility.

(3) When the composition is combined with a substrate resin, it is possible to provide high physical properties such as a high conductivity or a high mechanical property due to its high dispersibility or its high wettability, and to achieve high processibility.

Herein, as a thermoplastic resin, various resins such as polyvinyl chloride, polyvinyl acetate, polystyrene, low molecular weight polyethylene (number average molecular weight 1000 to 7000) may be used.

Unlike carbon black, diamond, graphite, or fullerene, the CNT is a tube-shaped carbon isotope which has a high aspect ratio (diameter: several nm to about 500nm, length: several tens of nm to several tens of $\mu$m).

The CNT may be variously prepared according to preparation methods and post-treatments. It may be largely divided into a single-walled carbon nanotube, a double-walled carbon nanotube, a multi-walled carbon nanotube, etc. Hereinafter, these are generically referred to as a 'carbon nanotube'. Especially, the multi-walled carbon nanotube may have a wide range in terms of its diameter or length according to the preparation methods or the post-treatments. However, herein, its diameter or length is indicated as the average value.

A CNT is produced by an arc discharge method, a catalytic vapor phase method, a laser abrasion method, or other methods. According to the production methods, the final shape of a CNT varies. Especially, in some methods, a CNT is obtained as an aggregation. Such an aggregation has a strong bundle cohesiveness, and a complicated entanglement of CNTs, and thus as it is cannot show the characteristic of a CNT. Accordingly, it is important to refine the aggregation by practically removing by-products or impurities, and obtain a fiber characteristic by 'disintegrating' the CNT aggregation in a resin or a solvent. For this reason, it is important to achieve a very high volume (low apparent specific gravity) so that the density of an extra fine denier fiber of a CNT is 0.1kg/ l or less, and a gap between fibers of the CNT can be shown. In the present invention, there is no specific limitation in a usable CNT. However, in general, a CNT having a short diameter of several nm to about 500nm, and a length of several tens of nm to several tens of μm is used. Herein, one kind or two or more kinds of CNTs may be used without any limitation. When one kind of CNT is used, it is preferable that the CNT has a diameter of 200nm or less, and a length of about several μm.

In the inventive CNT-rich resin composition, the CNT is combined in an amount of 100 to 1500 parts by weight, preferably of 200 to 1000 parts by weight, with respect to 100 parts by weight of thermoplastic resin.

The inventive CNT-rich resin composition (hereinafter, referred to as a 'resin composition'), for example, is mix-kneaded with a substrate resin (the same or different kind of resin as a thermoplastic resin used as a filler). When the CNT is included in an amount of less than 200 parts by weight in the inventive resin composition, a large amount of resin composition is required during mix-kneading with a substrate resin, and thus its usefulness as a master batch tends to be insufficient. Also, when the amount of the CNT is less than 100 parts by weight, such tendency becomes significant. Thus, this is not preferable.

Also, when the inventive resin composition is mix-kneaded at a high mixing ratio, with a different kind of substrate resin, the resin property such as impact strength may be reduced. Accordingly, it is preferable that the mixing ratio of the inventive resin composition with respect to the substrate resin is low. However, since the inventive resin composition contains a significantly large amount of CNT, it is possible to use a large amount of CNT by combining only a small amount of the inventive composition with the substrate resin.

Meanwhile, when the CNT is included in an amount of greater than 1000 parts by weight in the inventive CNT-rich resin composition, a granulated product is powdered during mix-kneading with a different resin, and a part of CNT in the resin composition is scattered. Thus, this is not preferable in views of the environment and safety. Also, when the CNT is included in an amount of greater than 1500 parts by weight, such tendency becomes significant. In other words, when the amount of CNT included in the CNT-rich resin composition is too large, only the same effect as that in a granulated product not coated with a resin can be achieved.

The mix-kneading between the inventive resin composition and the substrate resin is carried out by combining both materials in appropriate ratios, heating the mixture up to 130 to 270°C, and using a mixing roll, an extruder, or a banbury mixer on the melted resin.

When the inventive resin composition is used, there is no scattering of a CNT in a workplace. This improves safety. Also, only a short mix-kneading time is required for including a CNT in a required amount in the substrate resin. This improves the workability.

In the CNT-rich resin composition, the CNT has a fiber diameter of 1 to 200nm, and a fiber length of 1 to 100μm. Through the composition, the following advantages can be achieved.

(1) A resin is uniformly coated on a CNT without a stain. As a result, the bulk density is increased by granulation, thereby significantly improving the scattering property. Also, it is possible to significantly improve the dispersibility in a substrate resin.

In a case where the CNT has a fiber diameter of greater than 200nm, or a fiber length of greater than 100μm, although granulation can be achieved, the CNT cannot provide the conductivity and improve the mechanical property. Thus, when the CNT-rich resin composition is mix-kneaded with a substrate resin, the properties cannot be improved. Thus, a fiber diameter of greater than 200nm, or a fiber length of greater than 100μm is not preferable. Also, when a CNT has a fiber diameter of 1nm or a fiber length of 1μm, it is impossible to achieve the production with a high yield. Thus, the CNT having a fiber diameter of 1nm or a fiber length of 1μm cannot be used.

In accordance with another aspect of the present invention, there is provided a method for producing a carbon nanotube-rich resin composition, the method including: (1) a dissolving step of dissolving a thermoplastic resin in a non-water-soluble solvent so as to provide a resin binder solution; (2) a suspending step of adding a carbon nanotube in an amount of 100 to 1500 parts by weight with respect to 100 parts by weight of the thermoplastic resin in the resin binder solution, to water, followed by uniformly suspending, so as to provide a suspension; (3) a mixing step of adding the resin binder solution obtained from the dissolving step to the suspension obtained from the suspending step so as to provide a mixture liquid; (4) an agitation step of agitating the mixture liquid obtained from the mixing step, so as to transit the carbon nanotube from a water phase to a resin phase; and (5) a separating/drying step of separately removing the water phase and the resin phase from the mixture liquid obtained from the agitation step, and drying the resin phase so as to provide the carbon nanotube-rich resin composition.

Through the composition, the following advantages can be achieved.

(1) A thermoplastic resin is dissolved and then added to a uniform suspension of CNT and water, followed by agitating. Then, the sufficiently dissolved CNT is transited from a water phase to a resin phase by a flushing operation. Herein, since during the transition, the sufficiently dissolved CNT is coated with a resin binder, it is easy to uniformly coat the CNT with the thermoplastic resin without a stain.

(2) In the agitation step, through agitation, a resin phase can be sized. Thus, the CNT-rich resin composition can be granulated as a granulated product with a size allowing the CNT to be easily handled. Accordingly, it is possible to improve the scattering property, and the handling capability (such as handlability and workability) in use of the composition, and to improve the dispersibility during the mixing with a substrate resin. Also, in the following separating/drying step, the separation of the water and the resin composition can be very simply performed, thereby increasing the productivity.

(3) The periphery of a CNT is coated with a resin before the granulation. Thus it is possible to obtain a CNT-rich resin composition with a high powder strength and a low scattering property.

In the dissolving step, the thermoplastic resin is dissolved in a non-water-soluble solvent. As the solvent used in this step, besides the non-water-soluble solvent as claimed in claim 4, a water-soluble solvent may be used.

Examples of a thermoplastic resin used in the present invention may include various resins such as polyvinyl chloride, polyvinyl chloride acetate, polystyrene, low molecular weight polyethylene (number average molecular weight 1000 to 7000), etc.

As a solvent, various non-water-soluble solvents capable of dissolving a thermoplastic resin therein may be used. In order to simply determine the solubility, it is determined if a circular filter paper #5C (Advantech Co., Ltd) can completely filter liquids. If there is a residue even in a small amount after filtering, the solvent has to be changed.

Examples of a non-water-soluble solvent include organic solvents such as toluene, xylene, hexane, tetrahydrofuran, benzene, cyclohexane, etc.

In the suspending step, the CNT is mixed with water in an amount of 100 to 1500 parts by weight, preferably of 200 to 1000 parts by weight, with respect to 100 parts by weight of the thermoplastic resin, and then uniformly suspended. The concentration of CNT in the suspension preferably ranges from 0.1 to 10 wt %, and more preferably ranges from 0.5 to 5 wt %. When the concentration is less than 0.5wt%, the dispersibility of the CNT in the substrate resin is lowered. Furthermore, during mix-kneading with the substrate resin, the time for increasing the mixing ratio of the CNT is required. This reduces the production efficiency. Also, when the concentration is less than 0.1wt%, such tendency becomes significant. Thus, such a low concentration is not preferable. When the concentration is greater than 5wt %, the viscosity of the water-CNT suspension is increased, thereby preventing the dispersion of CNT from being sufficiently performed. This makes it easy to produce a large CNT aggregation lump, and thus, the resin coating cannot be sufficiently performed. Thus, the performance of the CNT-rich resin composition may be reduced. When the concentration is greater than 10wt%, such a tendency becomes significant. Thus, such a high concentration is not preferable.

In order to determine the dispersion extent of the CNT in the water, the suspension is taken out by a pipette on a glass plate, and uniformly spread out by a spatula. Then, a non-dispersed lump is observed by the naked eye and by touch, and the suspending process is continuously performed until the rough feeling to touch disappears. Through this process, the CNT is placed in a sufficiently dissolved state from an aggregation lump state.

In the suspending, it is preferable that a CNT is suspended in a dispersion medium such as water by mechanical agitation. Also, ultrasonic irradiation may be used in combination.

Through the suspending step, the cohesion of a CNT is dissolved, and thus the resin coating can be uniformly performed without a stain. Also, even in a CNT-rich resin composition, the CNT can be in a sufficiently dissolved state when dispersed in a substrate resin by mix-kneading.

In the mixing step, a resin-soluble solvent is required to be mixed under the condition of a uniform addition speed, for example, 60cc/min. When the solvent is non-uniformly mixed, the adsorption of a thermoplastic resin to a CNT becomes non-uniform. This has a bad effect on the final performance.

Also, it is preferable that the dropping is carried out by a tube pump, a diagram pump, a gear pump, or the like, under the condition of the CNT-water suspension temperature of 50°C or less, preferably of 25°C or less.

In the dropping process, it is unnecessary that the shape of a liquid drop is granulation. According to an agitation speed, a thin liquid column shape of a drop may be continuously dropped.

Herein, there is no specific limitation in the temperature of the additive liquid, as long as it is around room temperature.

In the agitation step, it is preferable that the agitation comes to an end within 30 minutes although it depends on the temperature of a suspension solution. When the agitation is continued for 30 minutes or more, the produced ball-shaped resin composition may be crushed and then formed into a slurry-shape.

During agitation of a CNT-water uniform suspension, when a resin binder solution is added in a liquid drop shape or a thin liquid column shape, two-phases such as a resin phase and a water phase are formed. The CNT mainly exists as a water phase at the initial stage. Then, as the agitation is continued, the CNT in a water phase is transited into a resin phase (a flushing operation). Herein, there exists a solvent, the granulated composition containing the CNT and the resin can be ball-shaped through agitation. Thus, it is easy to handle the granulated composition. After the transition of the CNT into the resin phase, the granulated composition containing the CNT and the thermoplastic resin is obtained by removing the water and the solvent from a mixing system.

In the separating/drying step, since the CNT-rich resin composition has been granulated and grown with a large particle size so that the CNT can be easily handled, the separating process can be simply performed by using a sieve. The drying process may be performed by vapor drying or vacuum drying. Herein, in the vapor drier, the temperature is preferably 200 °C or less, and in the vacuum drying, the temperature is preferably 150°C or less. When the temperature is higher than this range, the thermoplastic resin coated on the CNT is degraded, thereby lowering the final performance. The drying temperature is required to be set as an appropriate temperature according to a thermoplastic resin to be used. Also, before the drying process in a drier, a granulated product is spread on a batt, etc., and naturally dried by a draft, etc. at room temperature. This makes it easy to perform the following processes.

In accordance with a further aspect of the present invention, there is provided a method for producing a carbon nanotube-rich resin composition, the method including: (1) a dissolving step of dissolving a thermoplastic resin in a water-soluble solvent so as to provide a resin binder solution; (2) a suspending step of adding a carbon nanotube in an amount of 100 to 1500 parts by weight with respect to 100 parts by weight of the thermoplastic resin in the resin binder solution, to water, followed by uniformly suspending, so as to provide a suspension; (3) a mixing step of adding the resin binder solution obtained from the dissolving step to the suspension obtained from the suspending step so as to provide a mixture liquid($\alpha$); (4) an adding step of adding a non-water-soluble solvent to the mixture liquid($\alpha$) obtained from the mixing step so as to provide a mixture liquid ($\beta$); (5) an agitation step of agitating the mixture liquid ($\beta$) obtained from the adding step, so as to transit the carbon nanotube from a water phase to a resin phase; and (6) a separating/drying step of separately removing the water phase and the resin phase from the mixture liquid ($\beta$) obtained from the agitation step, and drying the resin phase so as to provide the carbon nanotube-rich resin composition.

Through the composition, the following advantages can be achieved.

   (1) The solvent for the thermoplastic resin is not limited to the non-water-soluble solvent. For the dissolution of the thermoplastic resin, a water-soluble solvent may be used so as to prepare the CNT-rich resin composition.

As a solvent in the present invention, various water-soluble solvents capable of dissolving a thermoplastic resin therein may be used. In order to simply determine the solubility, it is determined if a circular filter paper #5C (Advantech Co., Ltd) can completely filter liquids. If there is a residue even in a small amount after filtering, the solvent has to be changed.

Also, examples of a water-soluble solvent include organic solvent such as acetone, nitromethane, methyl ethyl ketone, ethyl ether, pyridine, etc.

Herein, when the thermoplastic resin is dissolved in the water-soluble solvent, between the mixing step and the agitation step in the method as claimed in claim 3, an adding step for adding a non-water-soluble solvent is inserted.

When a water-soluble solvent is used for dissolving a thermoplastic resin, the solvent is added to the CNT-water suspension at the CNT-water suspension temperature of 50°C or less, preferably of 25 °C or less, for example, at a predetermined speed of 60cc/min. Then, until a granulated product is formed, a non-water-soluble organic solvent is added thereto, for example, at a predetermined speed of 60cc/min. Thus, the CNT is transited from a water phase to a resin phase. The dropping is carried out by a tube pump, a diagram pump, a gear pump or the like.

In the dropping process, it is not necessary that the shape of a liquid drop is granulated. A thin liquid column shape of drop may be continuously dropped.

Herein, there is no specific limitation in the temperature of the additive liquid, as long as the temperature is in a range where an obstacle does not occur in reactions such as vaporization, thermal decomposition, and solidification.

The non-water-soluble solvent preferably has a SP value (Hansen solubility parameter) of 9.5 or less. When the value is greater than 9.5, the affinity with water is increased. This has a bad effect on the formation of a resin phase.

In the method for producing the CNT-rich resin composition, as claimed in claim 5, the non-water-soluble solvent is added in an amount 0.8 to 1.5 times as much as a DBP absorption value (JIS K 6221A method) of the carbon nanotube.

Through the composition, the following advantages can be achieved.

   (1) In the method for producing the CNT-rich resin composition, as claimed in claim 3, the resin coating of the thermoplastic resin on the CNT, and the granulation of the composition depend on the amount of added solvent. When the solvent is added in an amount less than 0.8 times the DBP absorption value of the CNT, solvent penetration into the CNT is weak. This degrades the resin coating. When the solvent is added in an amount greater than 1.5 times the value, it is difficult to granulate the composition due to emulsification. However, the addition of the solvent in an amount 0.8 to 1.5 times as much as a DBP absorption value of the CNT allows the CNT periphery to be coated by a very thin resin layer. Thus, the composition can be granulated.

Herein, it is preferable that the DBP absorption value is measured by a JIS k 6221A method set as an oil absorption value of carbon black.

In the method for producing the CNT-rich resin composition, as claimed in claim 6, the sum of the amounts of the water-soluble solvent and the non-water-soluble solvent is 0.8 to 1.5 times as much as the DBP absorption value (JIS K 6221A method) of the CNT.

Through the composition, the following advantages can be achieved.

(1) In the method for producing the CNT-rich resin composition by using a water-soluble solvent in the dissolution of a thermoplastic resin, as claimed in claim 4, the resin coating of the thermoplastic resin on the CNT, and the granulation of the composition depend on the sum of amounts of the water-soluble solvent and the non-water-soluble solvent. When the sum is less than 0.8 times the DBP absorption value of the CNT, solvent penetration into the CNT is weak. This degrades the resin coating. When the sum is greater than 1.5 times the value, it is difficult to granulate the composition due to emulsification. However, the sum of the amounts of the added solvents is 0.8 to 1.5 times as much as a DBP absorption value of the CNT, the CNT periphery can be coated by a very thin resin layer. Thus, the composition can be granulated.

The method for producing the CNT-rich resin composition, as claimed in claim 7, after the agitation step, includes a sizing step.

Through the composition, the following advantages can be achieved.

(1) Through the sizing step, the shape of a granulated product can be uniformly achieved. Thus, when the produced CNT-rich resin composition is used, it is possible to improve the scattering property, the handling capability (such as handlability and workability), and the dispersibility.

According to the inventive CNT-rich resin composition, the following advantages can be achieved.

According to the inventive CNT-rich resin composition as claimed in claim 1,

(1) A CNT in a powder shape is not simply granulated to improve the safety, but the periphery of a CNT particle is coated (microencapsulated) by a very small amount of thermoplastic resin. Then, the CNT particle is made into a granulated product, thereby greatly reducing the scattering extent of the CNT, and significantly improving the handling capability. As a result, for CNT manufacturers and users, the working conditions in the workplace are highly improved. Furthermore, in various processes requiring quantitative feedability, the quantitative precision can be significantly achieved.

(2) The wettability with a polymer matrix is greatly improved. The improvement in the wettability with a matrix reduces the dispersion time, and inhibits fracture. At the same time, compared to a granulated product not coated with a resin or a non-granulated product, it is possible to stably achieve a high conductivity or other physical properties. Also, since it is possible to combine the composition in a large amount with the polymer matrix, it is very useful from an industrial viewpoint.

According to the inventive CNT-rich resin composition as claimed in claim 2,

(1) Since the resin coating of a CNT is not inhibited, it is possible to uniformly coat the resin on the CNT inside as well as the CNT surface. Also, since the physical properties are stabilized, it is possible to improve the scattering property, the dispersibility, the handling capability, and the quantitative feedability.

According to the inventive method for producing the CNT-rich resin composition, as claimed in claim 3,

(1) Since the coating of a thermoplastic resin on a CNT can be easily uniformly carried out without a stain, the physical properties are stabilized. Compared to other products (a CNT-granulated product or a powder product) not using a binder, it is possible to significantly improve the scattering property, the dispersibility, and the handling capability. At the same time, in various processes requiring quantitative feedability, the quantitative precision can be significantly achieved.

(2) The CNT, in a sufficiently dissolved state, is coated with the resin, and also, can be granulated with a high bulk density. Furthermore, since there is no a strong cohesion between CNTs, it is possible to include the CNT in a significantly larger amount compared to that of a conventional CNT resin composition. Furthermore, the dispersibility in the substrate resin can be improved.

(3) It is possible to produce the CNT-rich thermoplastic resin composition through high-yield coating without a loss of CNT in the suspension. Also, compared to the conventional CNT resin composition, only a small amount of a resin for coating is required. Thus, the productivity can be improved.

According to the inventive method for producing the CNT-rich resin composition, as claimed in claim 4,

(1) For the dissolution of the thermoplastic resin, a water-soluble solvent can be used. Accordingly, for the resin used for the CNT coating, the production cost, or the reaction condition, an appropriate solvent can be selected from among a non-water-soluble solvent, and a water-soluble solvent.

According to the inventive method for producing the CNT-rich resin composition, as claimed in claim 5,

(1) According to the condition of the amount of the non-water-soluble solvent used for dissolving the thermoplastic resin, the CNT periphery can be coated with a very thin resin layer. Furthermore, the CNT-rich resin composition can be granulated as a granulated product with a size allowing the CNT to be easily handled.

According to the inventive method for producing the CNT-rich resin composition, as claimed in claim 6,

(1) According to the condition of the sum of the amounts of the water-soluble solvent for dissolving the thermoplastic resin, and the non-water-soluble organic solvent added in the adding step, the CNT periphery can be coated with a very thin resin layer even though the water-soluble solvent is used for dissolving the thermoplastic resin. Furthermore, the CNT-rich resin composition can be granulated as a granulated product with a size allowing the CNT to be easily handled.

According to the inventive method for producing the CNT-rich resin composition, as claimed in claim 7,

(1) There is no crushing of the CNT-rich resin composition since agitation is not excessively carried out in the producing process. Then, by a sizing effect, the granulated product can be placed in a uniform state. Furthermore, the CNT-rich resin composition can be granulated as a granulated product with a size allowing the CNT to be easily handled.

DETAILED DESCRIPTION OF THE PREFERRED EMBODIMENTS

Hereinafter, the present invention will be described in more detail with reference to Examples. However, the following examples are not intended to limit the scope of the invention.

Two kinds of CNTs (as noted in table 1) were prepared, which were prepared by a catalytic vapor phase preparation method. Especially, the multi-walled carbon nanotube may have a wide range of its diameter or length according to the preparation methods or the post-treatments. However, herein, its diameter or length is indicated as an average value.

Example 1

As a thermoplastic resin as a binder, low molecular weight polyethylene having a molecular weight of 3000 and a melting point of 109 °C, that is, Hi-wax 320P (Mitsui Kagaku) was used. As a non-water-soluble solvent, xylene was used. A thermoplastic resin used as a substrate resin is noted in Table 2.

First, the resin was dissolved in xylene (SP value 8.8) heated up to 80 to 90°C, so as to provide a resin binder solution containing 3wt % polyethylene. Through filtering by circular filter paper #5C, it was found that there was no residue after the filtering of the solution.

Then, 50g of the CNT A noted in table 1, and 4950g of pure water were introduced in a 10L stainless circular vessel, and were subjected to a dispersing process by a homogenizer-type agitator at 6000rpm for 30 minutes. From among the dispersion liquid, several drops were taken out by a pipette on a glass plate, and uniformly spread out by a spatula. Then, a non-dispersed lump was observed by the naked eye and by touch, and it was found that there were no rough non-dispersed lumps.

Then, the blade of the agitator was replaced by a paddle blade, and during agitation at 1000rpm, 300g of the resin binder solution (containing polyethylene) was dropped at a uniform speed for 5 minutes. After the completion of the dropping, the rotation of the agitator was lowered to 600rpm, and a sizing step was performed for about 5 minutes so as to provide a granulated product with a diameter of 0.8 to 1.3mm. The obtained granulated product was passed through 60-mesh sieve so as to separate the water from the CNT. Then, the product was naturally dried within a draft at room temperature for about 20 hours, and then heated up to 90 to 110 °C by using a vacuum drier. The solvent and the residual water were dried at 150°C for 1 hour until their amount can be 0.5% or less through heating loss so as to provide a CNT-rich resin composition. Next, the resin composition was combined and mix-kneaded with the synthetic resin (substrate resin) noted in table 2.

In order to mix-knead the CNT-rich resin composition with the substrate resin, a mixing roll having two rolls (roll interval 1.5mm) was used, in which the two rolls have a front roll and a rear roll (diameter: 3 inch). First, the front roll and the rear roll of the mixing roll were rotated at 15rpm and 17rpm respectively. Then, on the front roll, 50g of substrate resin was rolled and adhered with a width of 10cm, and then between both rolls, the inventive CNT-rich resin composition was introduced in respective limited amounts. By rotation of both rolls, at 130 to 160°C (ABS resin: 160°C, PVC resin: 130°C), the substrate resin and the resin composition were mix-kneaded. The time required for introducing a predetermined amount of resin composition between both rolls is, as a combination necessary time, noted in table 3. The mix-kneaded product obtained after the mix-kneading was pressed by a press machine (15 to 20t) at 150 to 180°C, so as to provide a test sample (100×100×2mm) of the CNT-containing synthetic resin (conductive resin). Then, the volume specific resistance was measured, and the result is noted in table 4.

[table 1]

| Kind of CNT | | Diameter (nm) | Length (μm) | Purity (%) | CNT content(wt%) in uniform suspension | DBP absorption value(cc/100g) |
|---|---|---|---|---|---|---|
| A | Preparation of NC7000 Nanocyl | 9.5 | 1.5 | 90 | 1.0 | 544 |
| B | Preparation of VGCF-S Showa Denko | 100 | 10 | - | 2.0 | 265 |

[table 2]

| | Kind of synthetic resin (substrate resin) | Additive |
|---|---|---|
| C | ABS resin UT61 (Mitsui Kagaku) | - |
| D | PVC resin P450 (V-Tech) | Containing dioctyl phthalate 30wt% |

[table 3]

| Examples and Comparative Examples | resin composition preparation condition | | | | | | | | | | Shape of formed granule |
|---|---|---|---|---|---|---|---|---|---|---|---|
| | Kind of CNT | resin | Kind of solvent | Amount of added resin binder solution (g) | Added solvent, and its amount (g) | Resin concentration (%) | Amount of water for CNT dispersion (g) | Amount of CNT (g) parts by weight(*) | Ratio with respect to DBP absorption value | Agitation time after dropping of solvent ( min) | |
| Example1 | A | PE | xylene | 300 | - | 3 | 4950 | 50(556) | 1.07 | 5 | 0.8~1.3mm granule |
| Example2 | B | PE | xylene | 147 | - | 3 | 4950 | 50(1134) | 1.08 | 5 | 0.9~1.2mm granule |
| Example3 | A | PVC | MEK | 156 | xylene14 0 | 8 | 4950 | 50(401) | 1.04 | 5 | 0.5~1.1mm granule |
| Example4 | A | PE | xylene | 250 | - | 10 | 4950 | 50(200) | 0.83 | 5 | 0.9~1.1mm granule |
| Example5 | A | PE | xylene | 167 | xylene14 0 | 2 | 4950 | 50(1497) | 1.11 | 5 | 0.7~1.1mm granule |
| Comparative Example4 | A | PE | xylene | 400 | - | 2 | 4950 | 50(543) | 1.66 | 5 | Placed in a suspended state, without production of a granulated product |
| Comparative Example5 | A | PE | xylene | 190 | - | 4.74 | 4950 | 50(555) | 0.67 | 5 | CNT was not transited from water dispersion to solvent |

(continued)

| Examples and Comparative Examples | resin composition preparation condition | | | | | | | | | | Shape of formed granule |
|---|---|---|---|---|---|---|---|---|---|---|---|
| | Kind of CNT | resin | Kind of solvent | Amount of added resin binder solution (g) | Added solvent, and its amount (g) | Resin concentration (%) | Amount of water for CNT dispersion (g) | Amount of CNT (g) parts by weight(*) | Ratio with respect to DBP absorption value | Agitation time after dropping of solvent ( min) | |
| Comparative Example6 | A | PE | xylene | 300 | - | 0.5 | 970 | 30(2000) | 1.83 | 180 | Placed in a slurry state, without production of a granulated product |
| ❖ 'parts by weight' indicates parts by weight of CNT with respect to 100 parts by weight of resin | | | | | | | | | | | |

[table 4]

| Examples and Comparative Examples | substrate resin | CNT combination concentration (wt%) | physical properties | | | |
|---|---|---|---|---|---|---|
| | | | combination necessary time (min) | scattering ratio (wt%) in combination | volume specific resistance ($\Omega\cdot$cm) | Izod impact strength (kg·cm/cm) |
| Example1 | C | 5 | 5 | 0.1 or less | $4.8\times10^2$ | 17.2 |
| Example2 | C | 5 | 4 | 0.1 or less | $2.2\times10^5$ | - |
| Comparative Example1 | C | 5 | 15 | 9 | $5.1\times10^3$ | 5.8 |
| Comparative Example2 | C | 5 | 12 | 7 | $7.4\times10^5$ | - |
| Example3 | D | 5 | 3 | 0.1 or less | $3.1\times10^1$ | - |
| Comparative Example3 | D | 5 | 13 | 10.5 | $4.5\times10^1$ | - |
| Example4 | C | 5 | 4 | 0.1 or less | $3.9\times10^2$ | - |
| Example5 | C | 5 | 5.8 | 0.8 | $6.6\times10^2$ | - |

Example 2

A resin composition was obtained in the same manner as described in Example 1 except that the CNT B noted in table 1 was used (see table 3). Since the DBP absorption value (265cc/100g) of the CNT B was smaller than that of the CNT A, xylene was added in an amount of 147g.

Example 3

Polyvinyl chloride P454 (V-Tech Corporation) was dissolved in methyl ethyl ketone (SP value: 9.3, 29g soluble in 100cc water) at room temperature, so as to provide a methyl ethyl ketone solution containing 8wt % polyvinyl chloride. Through filtering by a circular filter paper #5C, it was found that there was no residue after the filtering of the solution.
Then, a water-CNT A (noted in table 1) dispersion preparation method, and a method and a condition in a process for producing a granulated product by dropping a methyl ethyl ketone solution containing polyvinyl chloride to the dispersion were the same as described in Example 1. However, even when 156g of the methyl ethyl ketone solution was dropped, a granulated product was not obtained. Thus, 140g of xylene was additionally dropped so as to provide a granulated product. The drying process of the resin composition, the mix-kneading process with the synthetic resin (substrate resin) noted in table 2, and the formation process were the same as described in Example 1.

Example 4

A CNT-rich resin composition was prepared in the same manner as described in Example 1 except that CNT was included in an amount of 200 parts by weight in the resin composition. Specific conditions are noted in table 3.

Example 5

A CNT-rich resin composition was prepared in the same manner as described in Example 1 except that CNT was included in an amount of 1500 parts by weight in the resin composition. Specific conditions are noted in table 3.

(Comparative Example 1 to 3)

Without using the resin composition in Examples 1 to 3, the CNT powder was directly combined with a substrate resin.

(Comparative Example 4 and 5)

As noted in table 3, the solvent for dissolving the resin from Example 1 was added in amounts 1.69 times and 0.7 times as much as a DBP absorption value. In Comparative Example 4, the composition was placed in a muddy suspension, and was not granulated. Also, in Comparative Example 5, the CNT was not transited from water dispersion to solvent side, and thus was not granulated.

(Comparative Example 6)

This example was carried out under the conditions as noted in table 3. Herein, the solvent for dissolving the resin was added in an amount 1.84 times as much as a DBP absorption value, and then after the dropping of the solvent, agitation was carried out for 3 hours. As a result, the composition was placed in a further advanced muddy state, compared to that in Comparative Example 4. In other words, it was placed in a slurry state.

<Experimental Example 1 (measurement of a volume specific resistance)>

For a volume specific resistance, a test sample with a resistance of greater than 106Ω was measured by a high rester UP(HT-450) (mitsubishi kagaku), and a test sample with a resistance of less than 106Ω was measured by a low rester GP(T610) (mitsubishi kagaku), at 25°C and at humidity 60%. Then, the result was calculated by the following equation.

$$\mathtt{volume\ specific\ resistance\ (\Omega \cdot cm)=\ resistance \times RCF \times t(cm)}$$
$$\mathtt{of\ test\ sample}$$

RCF: resistivity correction factor
t : thickness(cm) of test sample
The obtained volume specific resistance of the resin test sample is noted in table 4.
For comparison, the conductivities of Comparative Examples 1 to 3 were measured in the same manner. The result is also noted in table 4.

<Experimental Example 2 (measurement of a scattering ratio)>

The scattering ratio (D) of CNT scattered during mix-kneading in Examples 1 to 5, and Comparative Examples 1 to 3 was calculated by the following equation 1. The result is noted in table 4.

$$\mathtt{[Equation\ 1]}$$
$$\mathtt{D=((R+C)-K)/(R+C)\times 100}$$

Herein, D denotes the amount (%) of scattered CNT, R denotes the weight (g) of a substrate resin, C denotes the weight (g) of the combined inventive resin composition or the combined CNT, and K denotes the total weight (g) of the resin after combination with the CNT.

< Experimental Example 3 (test on an Izod impact strength)>

On the compositions from Example 1 and Comparative Example 1, an Izod impact strength was measured by using an impact strength measurer, that is, a universal impact tester (toyoseiki kabushiki kaisha), in accordance with JIS K6871. The result is noted in table 4.
As noted in table 4, through comparison between compositions from Example 1 and Comparative Example 1, it can be found that the inventive CNT-rich resin composition showed a high conductivity and a high Izod impact strength even at the same CNT combination concentration as that in a CNT not including a resin binder due to its significantly high wettability dispersibility with a polymer matrix.
Also, through comparisons between Example 1 and Comparative Example 1, Example 2 and Comparative Example 2, and Example 3 and Comparative Example 3, it can be found that the inventive CNT-rich resin composition required a significantly reduced combination necessary time and showed a significantly reduced scattering ratio during combination, due to high wettability with polymer matrix, significantly low scattering property, and high handling capability, compared to a CNT not including a resin binder.

According to the inventive method for producing the CNT-rich resin composition, since the thermoplastic resin is coated on the CNT inner surface as well as the CNT outer surface, the handlability of the CNT is significantly improved. Also, the adhesion with a substrate resin is significantly improved, thereby improving the mechanical property, etc. Furthermore, during mix-kneading, since the quantitative feedability of the CNT is significantly improved, the quality variation of the compound within a lot is significantly stabilized. Also, the scattering property is highly reduced, thereby eliminating the loss of the CNT. Also, the CNT can be reliably combined up to a theoretical combination ratio, thereby improving physical properties of the compound. Also, safety to the human body is improved. At the same time, the granulated product shows a high mechanical strength, and an improved handling capability (such as handlability and workability). Also, due to the improvement in wettability or dispersibility with the polymer matrix, the dispersion time of CNT into a matrix can be reduced. Then, when the composition is combined with the polymer matrix, high physical properties (such as conductivity or mechanical properties) can be achieved. Also, without scattering, the CNT can be quantitatively fed to a polymer matrix. Furthermore, the composition has high wettability or high dispersibility with the polymer matrix, thereby significantly improving electrical/mechanical properties of the polymer matrix. Thus, the CNT-rich resin composition can be mass-produced at a low unit cost.

Although a preferred embodiment of the present invention has been described for illustrative purposes, those skilled in the art will appreciate that various modifications, additions and substitutions are possible, without departing from the scope and spirit of the invention as disclosed in the accompanying claims.

**Claims**

1. A carbon nanotube-rich resin composition containing a carbon nanotube coated with a thermoplastic resin, wherein a carbon nanotube in an amount of 100 to 1500 parts by weight is combined with respect to 100 parts by weight of a thermoplastic resin.

2. The carbon nanotube-rich resin composition as claimed in claim 1, wherein the carbon nanotube has a fiber diameter of 1 to 200nm, and a fiber length of 1 to 100$\mu$m.

3. A method for producing a carbon nanotube-rich resin composition, the method comprising:

   (1) a dissolving step of dissolving a thermoplastic resin in a non-water-soluble solvent so as to provide a resin binder solution;
   (2) a suspending step of adding a carbon nanotube in an amount of 100 to 1500 parts by weight with respect to 100 parts by weight of the thermoplastic resin in the resin binder solution, to water, followed by uniformly suspending, so as to provide a suspension;
   (3) a mixing step of adding the resin binder solution obtained from the dissolving step to the suspension obtained from the suspending step so as to provide a mixture liquid;
   (4) an agitation step of agitating the mixture liquid obtained from the mixing step, so as to transit the carbon nanotube from a water phase to a resin phase; and
   (5) a separating/drying step of separately removing the water phase and the resin phase from the mixture liquid obtained from the agitation step, and drying the resin phase so as to provide the carbon nanotube-rich resin composition.

4. A method for producing a carbon nanotube-rich resin composition, the method comprising:

   (1) a dissolving step of dissolving a thermoplastic resin in a water-soluble solvent so as to provide a resin binder solution;
   (2) a suspending step of adding a carbon nanotube in an amount of 100 to 1500 parts by weight with respect to 100 parts by weight of the thermoplastic resin in the resin binder solution, to water, followed by uniformly suspending, so as to provide a suspension;
   (3) a mixing step of adding the resin binder solution obtained from the dissolving step to the suspension obtained from the suspending step so as to provide a mixture liquid($\alpha$);
   (4) an adding step of adding a non-water-soluble solvent to the mixture liquid($\alpha$) obtained from the mixing step so as to provide a mixture liquid ($\beta$);

(5) an agitation step of agitating the mixture liquid (β) obtained from the adding step, so as to transit the carbon nanotube from a water phase to a resin phase; and
(6) a separating/drying step of separately removing the water phase and the resin phase from the mixture liquid (β) obtained from the agitation step, and drying the resin phase so as to provide the carbon nanotube-rich resin composition.

5. The method as claimed in claim 3, wherein the non-water-soluble solvent is added in an amount 0.8 to 1.5 times as much as a DBP absorption value (JIS K 6221A method) of the carbon nanotube.

6. The method as claimed in claim 4, wherein a sum of amounts of the water-soluble solvent and the non-water-soluble solvent is 0.8 to 1.5 times as much as a DBP absorption value (JIS K 6221A method) of the carbon nanotube.

7. The method as claimed in any one of claims 3 to 5, wherein after the agitation step, a sizing step is carried out.

**INTERNATIONAL SEARCH REPORT**

International application No.

PCT/JP2010/060079

A. CLASSIFICATION OF SUBJECT MATTER
*C08L101/00*(2006.01)i, *C08J3/20*(2006.01)i, *C08K7/06*(2006.01)i

According to International Patent Classification (IPC) or to both national classification and IPC

B. FIELDS SEARCHED

Minimum documentation searched (classification system followed by classification symbols)
C08L101/00, C08J3/20, C08K7/06

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-2621 A  (Toray Industries, Inc.),<br>08 January 2004 (08.01.2004),<br>claims; paragraphs [0012], [0013], [0015] to<br>[0021]<br>(Family: none) | 1,2<br>3-7 |
| X<br>A | JP 2006-312673 A  (Toray Industries, Inc.),<br>16 November 2006 (16.11.2006),<br>claims; paragraphs [0001], [0021], [0044]<br>(Family: none) | 1,2<br>3-7 |
| A | JP 2009-62461 A  (Dainichiseika Color &<br>Chemicals Mfg. Co., Ltd., Nikkiso Co., Ltd.),<br>26 March 2009 (26.03.2009),<br>claims; paragraphs [0002], [0014] to [0017]<br>(Family: none) | 1-7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 July, 2010 (16.07.10) | Date of mailing of the international search report<br>03 August, 2010 (03.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/060079 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-1898 A  (Kuan-Jiuh LIN),<br>10 January 2008 (10.01.2008),<br>claims; paragraph [0011]<br>& US 2007/0067881 A1    & EP 1878763 A3 | 1-7 |
| A | JP 2008-308582 A  (Mitsubishi Rayon Co., Ltd.),<br>25 December 2008 (25.12.2008),<br>claims; paragraphs [0001], [0012], [0013],<br>[0027]<br>(Family: none) | 1-7 |
| A | JP 2006-57057 A  (Bussan Nanotech Research<br>Institute Inc., Parker Corp.),<br>02 March 2006 (02.03.2006),<br>claims<br>(Family: none) | 1-7 |
| A | JP 2005-272555 A  (Honda Motor Co., Ltd.),<br>06 October 2005 (06.10.2005),<br>claims; paragraphs [0024], [0036]<br>& US 2006/0058443 A1    & EP 1580219 A1<br>& DE 602005000951 D | 1-7 |

Form PCT/ISA/210 (continuation of second sheet) (July 2009)